# EUROPEAN PATENT SPECIFICATION

(11) **EP 1 387 106 B1**
(45) Date of publication and mention of the grant of the patent: **26.04.2006**
(21) Application number: 03017186.2
(22) Date of filing: 29.07.2003
(51) Int. Cl.: F16D 48/06

(54) **Clutch control device**
Kupplungssteuerungsvorrichtung
Dispositif de commande pour embrayage

(30) Priority: 29.07.2002 JP 2002220139
(43) Date of publication of application: 04.02.2004
(73) Proprietor: AISIN SEIKI KABUSHIKI KAISHA, Kariya-shi, Aichi-ken (JP)
(72) Inventor: Mineo, Akira, Kariya-shi, Aichi-ken (JP); Terakawa, Tomomitsu, Anjo-shi, Aichi-ken (JP); Aikawa, Akira, Aichi-gun, Aichi-ken (JP); Nagasaka, Yasumitsu, Chita-gun, Aichi-ken (JP)
(74) Representative: TBK-Patent

(56) References cited:
- EP-A- 0 460 628
- WO-A-00/53945
- DE-A- 3 043 348
- FR-A- 2 817 311
- US-A- 4 646 891

## Description

### FIELD OF THE INVENTION

This invention generally relates to a clutch control device.

### BACKGROUND OF THE INVENTION

Known system performs a series of speed change operations such as engagement/disengagement of a clutch, gear shifting, and gear selection automatically according to a driver's intention or a driving condition of a vehicle through an operation of an actuator connected to a manual transmission.

According to a frictional clutch provided in the above system, an operation force required for the clutch to disengage from a flywheel, i.e. a release load of the clutch, is increased since a posture of a diaphragm spring is changed in connection with a wear of a clutch facing (clutch disc). Therefore, a system including a mechanism for compensating for the wear of the clutch facing is also known.

In order to compensate for the wear effectively, it is required to accurately estimate the wear amount of the clutch facing. It is thus desirable to perform an actual measurement to estimate the wear amount. However, the actual measurement is difficult in view of a cost.

Then, it is known that the wear amount of the clutch facing is estimated based on a change amount of a load required when an engagement relationship between the clutch disc and the flywheel is changed.

However, a pressure plate is elastically deformed in connection with a temperature change of the clutch facing, thereby affecting the load required when the engagement relationship between the clutch disc and the flywheel is changed. Thus, when the clutch facing is heated under the operation thereof, the wear amount of the clutch facing cannot be correctly estimated due to the influence of the elastic deformation of the pressure plate.

Further, document DE 30 43 348 A discloses a device for automatically operating a vehicle friction clutch, wherein an operational element is movable between an engaging condition and a disengaging condition. The device estimates the wear of the clutch facing only based on the motor current while the clutch disc is disengaging from a flywheel.

### Summary of the Invention

The object of the invention is to provide a clutch control device which is able to estimate a wear amount of a clutch facing more precisely.

This object is achieved by a clutch control device having the features of claim 1.

Further advantageous developments are described in the dependent claims.

### Brief description of the drawing figures

The foregoing and additional features and characteristics of the present invention will become more apparent from the following detailed description considered with reference to the accompanying drawing figures in which like reference numerals designate like elements and wherein:
Fig. 1 is a schematic view of a clutch control device according to an embodiment of the present invention;
Fig. 2 is an explanatory view of a clutch and an actuator;
Fig. 3 is a front view of the clutch;
Fig. 4 is a view explaining an operation of the clutch;
Fig. 5 is a view explaining an adjustment operation of the clutch;
Fig. 6 is a flowchart for detecting a standard release load value;
Fig. 7 is a flowchart continued from Fig. 6 for detecting the standard release load value;
Fig. 8 is a transition view showing a relation between a clutch stroke and an indicating current;
Fig. 9 is a transition view showing a relationship between a current and a reciprocation of a stroke;
Fig. 10 is a flowchart for calculating a temperature of a clutch facing;
Fig. 11 is a flowchart for estimating a wear of the clutch facing;
Fig. 12 is a graph showing a load change amount in response to a temperature change of the clutch facing.; and
Fig. 13 is a graph showing a load change amount in response to a wear amount of the clutch facing.

### DETAILED DESCRIPTION OF THE INVENTION

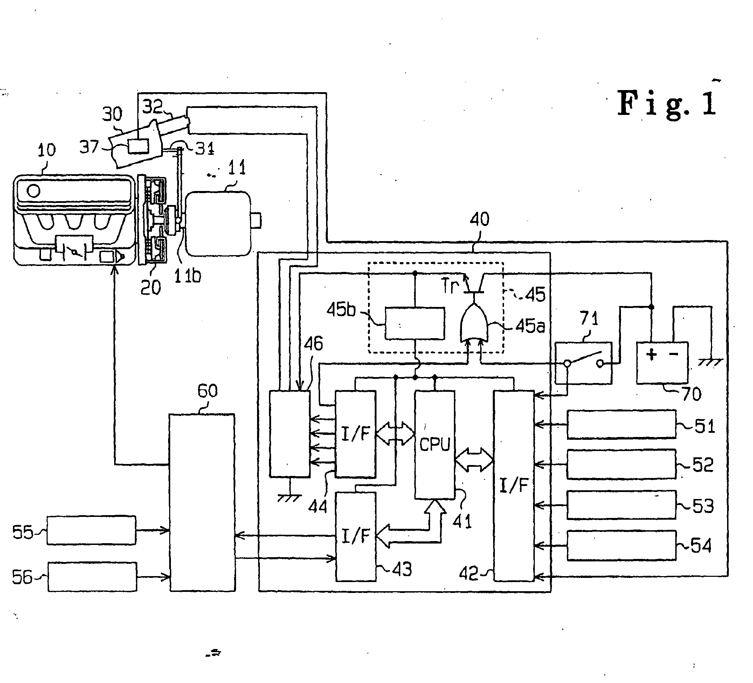

An embodiment of the present invention is explained referring to attached drawings. A clutch control device of the present invention schematically shown in Fig. 1 includes a frictional clutch 20 disposed between an engine 10, serving as a drive unit (a power source), and a transmission 11, an actuator 30 for actuating the frictional clutch 20, and a clutch control circuit 40 for outputting a drive command signal to the actuator 30.

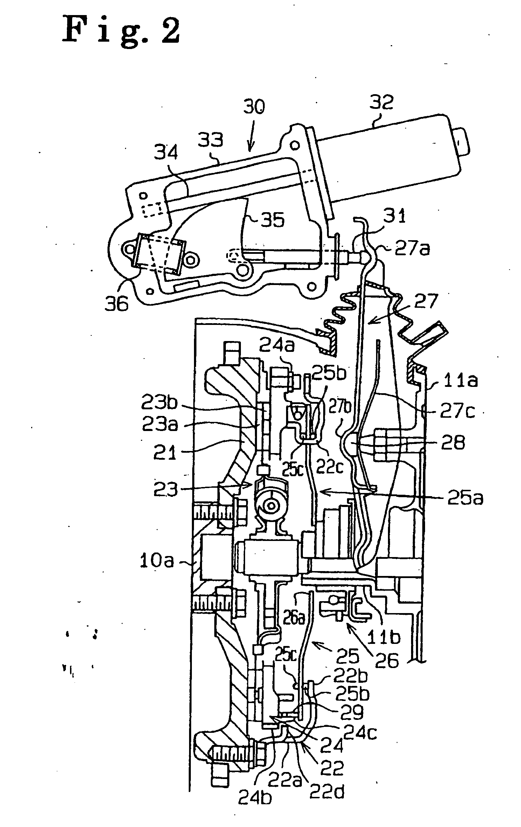

Fig. 2 shows the detail of the frictional clutch 20. The frictional clutch 20 includes a flywheel 21, a clutch cover 22, a clutch disc 23, a pressure plate 24, a diaphragm spring 25, a release bearing 26, a release fork 27, a pivot support member 28 secured to a transmission casing 11a, and an adjust wedge member 29. Clutch components unitarily attached to the clutch cover 22, such as the pressure plate 24, the diaphragm spring 25, and the release fork 27 may be called a clutch cover assembly.

The flywheel 21 is a cast-iron disc and is secured to a crankshaft (output shaft of the drive unit) 10a by means of a bolt so as to rotate with the crankshaft 10a as a unit.

The clutch cover 22 has a substantially cylindrical shape and includes a cylindrical portion 22a, a flange portion 22b extending radially inward from the cylindrical portion 22a, and a plurality of holder portions 22c formed at an inner circumferential edge of the cylindrical portion 22a so as to be arranged equally spaced in a circumferential direction. The clutch cover 22 also includes a pressure plate stopper portion 22d bent radially inward from the cylindrical portion 22a. An outer circumferential portion of the cylindrical portion 22a of the clutch cover 22 is secured to the flywheel 21 via bolts so that the clutch cover 22 rotates with flywheel 21 as a unit.

The clutch disc 23 is a frictional disc for transmitting the power of the engine 10 to the transmission 11 and is disposed between the flywheel 21 and the pressure plate 24. A center portion of the clutch disc 23 is spline-connected to an input shaft of the transmission 11 so that the clutch disc 23 is movable in an axial direction. Clutch facings 23a and 23b formed of a friction material are fixedly attached to the opposite sides an outer circumferential portion of the clutch disc 23 via rivets.

The pressure plate 24 presses the clutch disc 23 toward the flywheel 21 so that the clutch disc 23 is pinched between the pressure plate 24 and the flywheel 21, thereby engaging the clutch disc 23 with the flywheel 21 for unitary rotating therewith. The pressure plate 24 is connected to the clutch cover 22 via a strap 24a so as to rotate with the clutch cover 22.

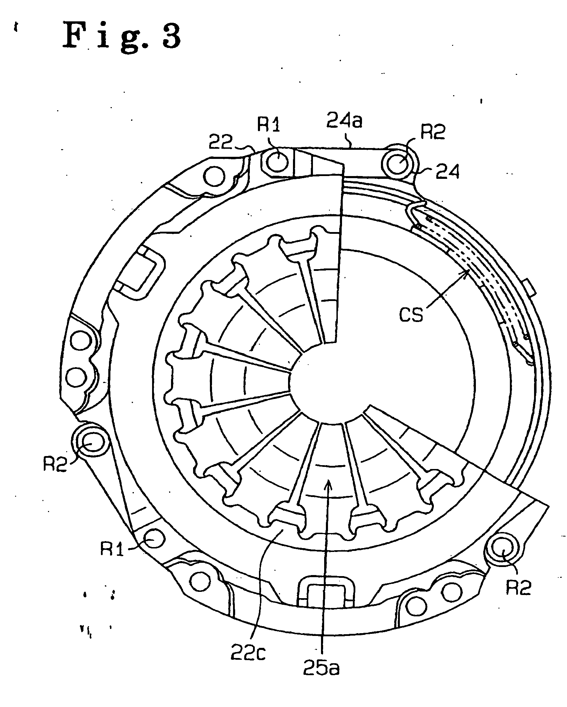

The strap 24a is formed of a laminate of a plurality of thin leaf springs. As shown in Fig. 3, one end of the strap 24a is secured to an outer circumferential portion of the clutch cover 22 by means of a rivet R1 while the other end is secured to a projection formed at an outer circumferential portion of the pressure plate 24 by means of a rivet R2. The strap 24a thus applies a force to the pressure plate 24 in the axial direction so that the pressure plate 24 moves away from the flywheel 21.

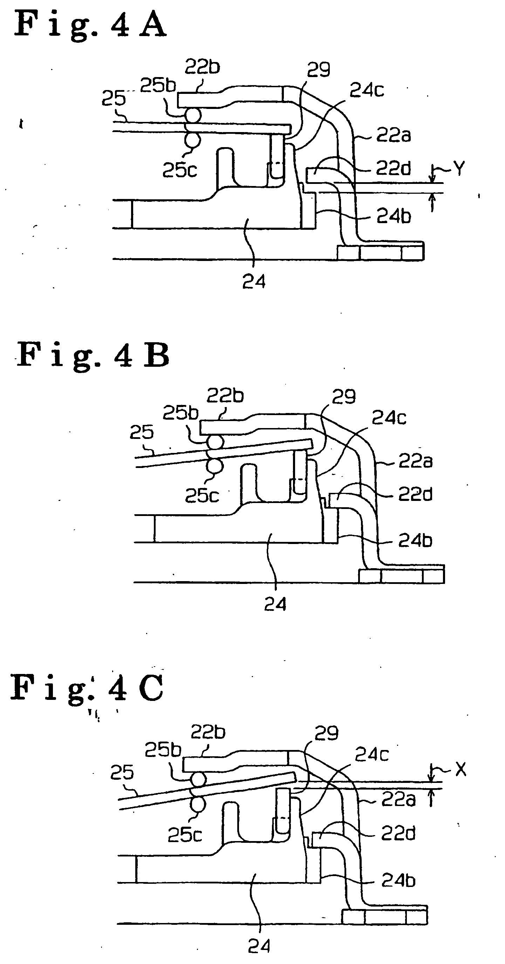

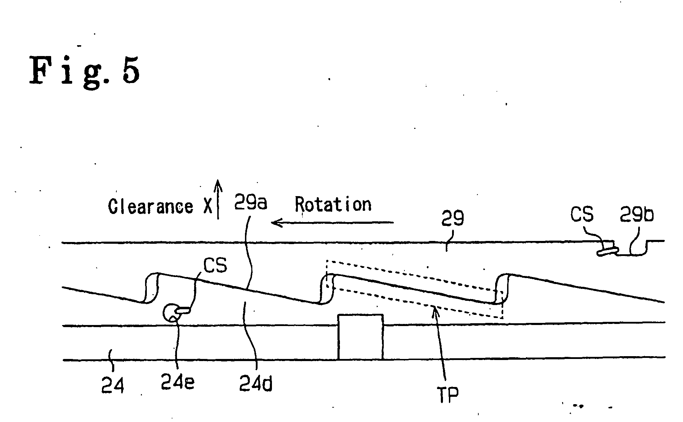

As shown in Figs. 2 and 4, a contact portion 24b is formed at the outermost circumferential portion of the pressure plate 24. When the pressure plate 24 moves by a predetermined amount toward the diaphragm spring 25, the contact portion 24b becomes in contact with the pressure plate stopper portion 22d of the clutch cover 22. A guide portion 24c is formed' at the pressure plate 24 on a radially inward side of the contact portion 24b so as to extend toward the diaphragm spring 25. As shown in Fig. 5, a saw-toothed taper portion 24d is formed at the pressure plate 24 on the radially inward side of the guide portion 24c so as to face the diaphragm spring 25.

As shown in Fig. 3, the diaphragm spring 25 includes a plurality (12 pieces) of resilient plate members (hereinafter referred to as "lever member 25a") arranged radially along the inner circumference wall of the cylindrical portion 22a of the clutch cover 22. As shown in Fig. 2, each lever member 25a is held by the holder portion 22c of the clutch cover 22 via a pair of annular fulcrum members (support members) 25b and 25c provided at opposite sides of each lever member 25a in the axial direction. Thus, the lever member 25a can move pivotally via the fulcrum members 25b and 25c relative to the clutch cover 22.

The adjust wedge member 29 is disposed between the taper portion 24d of the pressure plate 24 and an outer circumferential portion of the diaphragm spring 25. The adjust wedge member 29 has an annular shape and includes a taper portion 29a in the same shape as the taper portion 24d of the pressure plate 24 as shown in Fig. 5. The taper portion 29a of the adjust wedge member 29 and the corresponding taper portion 24d of the pressure plate 24 are in contact with each other at the corresponding taper planes TP. A surface of the adjust wedge member 29 facing the diaphragm spring 25 (upper surface in Fig. 5) has a flat shape. The adjust wedge member 29 forms a transmission path for transmitting a force between the pressure plate 24 and the diaphragm spring 25. The adjust wedge member 29 transmits a force applied to the diaphragm spring 25 and a force generated by the diaphragm spring 25 to the pressure plate 24.

As shown in Fig. 5, a notch 29b is formed at an appropriate position of the adjust wedge member 29 on a side facing the diaphragm spring 25. A through-hole 24e is formed at an appropriate position of the taper portion 24d of the pressure plate 24. End portions of a stretched coil spring CS engage with the notch 29b and the through-hole 24e. The pressure plate 24 and the adjust wedge member 29 are therefore biased by the coil spring CS to rotate relative to each other so that each tooth-crest of the taper portion 24d and each corresponding tooth-crest of the taper portion 29a mutually approach.

The release bearing 26 is slidably supported on a support sleeve 11b, which is supported by the transmission casing 11a, surrounding the input shaft of the transmission 11. The release bearing 26 includes a force applied portion 26a for pressing an inner end portion of the lever member 25a (center portion of the diaphragm spring 25) toward the flywheel 21.

The release fork 27 (fork member) is employed to slide the release bearing 26 in the axial direction in response to an operation of the actuator 30. One end of the release fork 27 is in contact with the release bearing 26 while the other end is in contact with an end portion of a rod 31 via a contact portion 27a of the release fork 27. The release fork 27 is attached to the pivot support member 28 by means of a spring 27c secured to the transmission casing 11a. A substantially center portion 27b of the release fork 27 is supported on the pivot support member 28 so that the release fork 27 moves pivotally on the pivot support member 28.

The actuator 30 is employed to move the rod 31 in a reciprocating manner. The actuator 30 includes an electric (DC) motor 32, and a housing 33 supporting the electric motor 32 and secured to an appropriate place within a vehicle. The housing 33 accommodates a rotating shaft 34 being rotated by the electric motor 32, a sector gear 35 having a fan shape in a side view as shown in Fig. 2 and swingably supported by the housing 33, and an assist spring 36.

The rotating shaft 34 forms a worm, which engages with an arc portion of the sector gear 35. A root end portion (one end portion opposite to the other end portion in contact with the release fork 27) of the rod 31 is pivotally supported by the sector gear 35. When the electric motor 32 rotates, the sector gear 35 rotates, thereby causing the rod 31 to move in a reciprocating manner relative to the housing 33.

The assist spring 36 is compressed while the sector gear 35 swings within a predetermined range. One end of the assist spring 36 engages with a rear end portion of the housing 33 while the other end engages with the sector gear 35. Thus, when the sector gear 35 swings by more than a predetermined angle in a clockwise direction in Fig. 2, the assist spring 36 biases the sector gear 35 to swing in the clockwise direction, thereby moving the rod 31 in a rightward direction in Fig. 2 and assisting the electric motor 32 to move the rod 31 in the rightward direction.

Referring to Fig. 1, the clutch control circuit 40 includes a microcomputer (CPU) 41, interfaces 42 to 44, a power supply circuit 45, and a drive circuit 46. The CPU 41 serving as an estimating means, a detecting means and a correcting means includes a ROM, a RAM, and an EEPROM (to be described late) in which a program and a map are stored.

The interface 42 is connected to a shift lever load sensor 51, a vehicle speed sensor 52, a gear position sensor 53, a transmission input shaft revolving speed censor 54, and a stroke sensor 37 as well as to the CPU 41 via a bus. The interface 42 sends detection signals received from these sensors to the CPU 41.

The shift lever load sensor 51 detects a load (shift lever load) generated when the shift lever of the transmission is operated. The vehicle speed sensor 52 detects the vehicle speed V while the gear position sensor 53 detects an actual transmission gear position. The transmission input shaft revolving speed sensor 54 detects the revolving speed of the input shaft of the transmission 11. The stroke sensor 37 secured to the actuator 30 detests a stroke of the rod 31 (hereinafter referred to as "clutch stroke ST") by detecting the swing angle of the sector gear 35.

The interface 43 is connected to the CPU 41 via a bus and also to an engine control unit 60 so as to bi-directionally communicate thereto. The CPU 41 of the clutch control circuit 40 is thus able to obtain the information collected by a throttle opening sensor 55 and an engine speed sensor 56 through the engine control unit 60.

The interface 44 is connected to one input terminal of an OR circuit 45a of the power supply circuit 45 and the drive circuit 46 as well as to the CPU 41 via a bus. The interface 44 transmits an appropriate signal to the OR circuit 45a and the power supply circuit 45 based on a command from the CPU 41.

The power supply circuit 45 includes the OR circuit 45a, a power transistor Tr whose base is connected to an output terminal of the OR circuit 45a, and a constant voltage circuit 45b. The collector of the power transistor Tr is connected to the plus terminal of a battery 70 installed in the vehicle while the emitter of the power transistor Tr is connected to the constant voltage circuit 45b and the drive circuit 46. When the power transistor Tr is turned on, the power is supplied to the constant voltage circuit 45b and the drive circuit 46. The constant voltage circuit 45b for converting the battery voltage to a predetermined constant voltage (5V) is connected to the CPU 41 and the interfaces 42 to 44 for supplying the power thereto. One terminal of an ignition switch 71, which is turned on or off by a driver, is connected to the other input terminal of the OR circuit 45a. The other terminal of the ignition switch 71 is connected to the plus terminal of the battery 70. The one terminal of the ignition switch 71 is also connected to the interface 42, thereby allowing the CPU 41 to detect the on/off status of the ignition switch 71.

The drive circuit 46 includes four switching elements (not shown), which is turned on or off in response to a command signal from the interface 44.

These switching elements constitute a known bridge circuit and are selectively turned on with ON periods thereof being controlled. The drive circuit 46 supplies an appropriate amount of the current to the electric motor 32, rotating in a predetermined direction or in the opposite direction thereto. That is, the electric motor 32 is supplied with a required current in response to the command signal via the drive circuit 46 based on an , indicating value (hereinafter referred to as "motor indicating current value clti") from the CPU 41.

The engine control unit 60 includes mainly a microcomputer (not shown) and controls the amount of fuel to be injected, ignition timing and the like of the engine 10. The engine control unit 60 is connected, for example, to the throttle opening sensor 55 for detecting a throttle opening angle TA of the engine 10 and the engine speed sensor 56 for detecting a rotational speed NE of the engine 10 so as to receive signals from the sensors 55 and 56 to process the received signals.

According to the clutch control device being constituted as above, in contrast to a conventional clutch pedal operation performed by a driver, the actuator 30 automatically performs a clutch engagement/disengagement operation. Specifically, the clutch engagement/disengagement operation is performed when the CPU 41 detects, for example, any of the following conditions: (1) a vehicle is shifting from a driving state to a stopping state (the rotational speed of the input shaft of the transmission becomes below a predetermined value); (2) a load detected by the shift lever load sensor 51 becomes above a predetermined value (driver's intention to shift gears has been confirmed); and (3) an accelerator pedal is depressed when the vehicle is stopped.

An operation of the clutch control device is explained as follows when the clutch is engaged so as to transmit the power of the engine 10 to the transmission 11. First, the drive circuit 46 supplies a predetermined current to the electric motor 32 in response to a command signal from the clutch control circuit 40, thereby rotating the electric motor 32. Then, the sector gear 35 swings in the counterclockwise direction in Fig. 2, causing the rod 31 to move in the leftward direction.

Meanwhile, the release bearing 26 receives a force from the diaphragm spring 25 to thereby move away from the flywheel 21 (rightward direction in Fig. 2). This force is transmitted to the release fork 27 via the releases bearing 26 and causes the release fork 27 to pivotally move in the counterclockwise direction in Fig. 2 via the pivot support member 28. Thus, when the rod 31 moves in the leftward direction in Fig. 2, the release fork 27 pivotally moves in the counterclockwise direction. At the same time, a center portion of the diaphragm spring 25 moves away from the flywheel 21.

At this time, the diaphragm spring 25 swings, i.e., a posture thereof is changed, and presses the adjust wedge member 29 in contact with the outer circumferential portion of the diaphragm spring 25 toward the flywheel 21. The pressure plate 24 receives a force causing the pressure plate 24 to move toward the flywheel 21 via the taper portion 24d, thereby pinching the clutch disc 23 in cooperation with the flywheel 21. As a result, the clutch disc 23 engages with the flywheel 21 to rotate as a unit with each other, thereby transmitting the power of the engine 10 to the transmission 11.

Next, an operation of the clutch control device is explained as follows when the clutch is disengaged so as not to transmit the power of the engine 10 to the transmission 11. First, the electric motor 32 is rotated so as to swing the sector gear 35 in the clockwise direction in Fig. 2. The rod 31 then moves in the rightward direction in Fig. 2, thereby applying a rightward force to the contact portion 27a of the release fork 27. The release fork 27 then pivotally moves in the clockwise direction in Fig. 2 via the pivot support member 28, thereby pressing the release bearing 26 toward the flywheel 21.

The diaphragm spring 25 receives a force, which causes the diaphragm spring 25 to move toward the flywheel 21, at the force applied portion 26a and then swings via the support members 25b and 25c. The outer circumferential portion of the diaphragm spring 25 moves away from the flywheel 21 and thus the force pressing the pressure plate 24 toward the flywheel 21 via the adjust wedge member 29 is reduced. Since the pressure plate 24 is connected to the clutch cover 22 via the strap 24a and constantly biased to move away from the flywheel 21, this biasing force causes the pressure plate 24 to move slightly away from the clutch disc 23. As a result, the clutch disc 23 is released and thus the power of the engine 10 is not transmitted to the transmission 11.

When the clutch is disengaged during a regular vehicle driving, the clutch stroke ST is controlled to a preset value STO so as to maintain a distance Y between the contact portion 24b of the pressure plate 24 and the pressure plate stopper portion 22d of the clutch cover 22 as shown in Fig. 4A.

A method for estimating the wear of the clutch facings 23a and 23b is explained as follows. According to the present embodiment, the wear of the clutch facings 23a and 23b is estimated based on a standard release load value of the clutch, which has been detected and registered upon shipment from the assembly plant. The standard release load value is detected under a predetermined condition and compared to a release load value detected when the clutch is used after shipped from the plant, which is explained later, for estimating the wear amount of the clutch facings 23a and 23b.

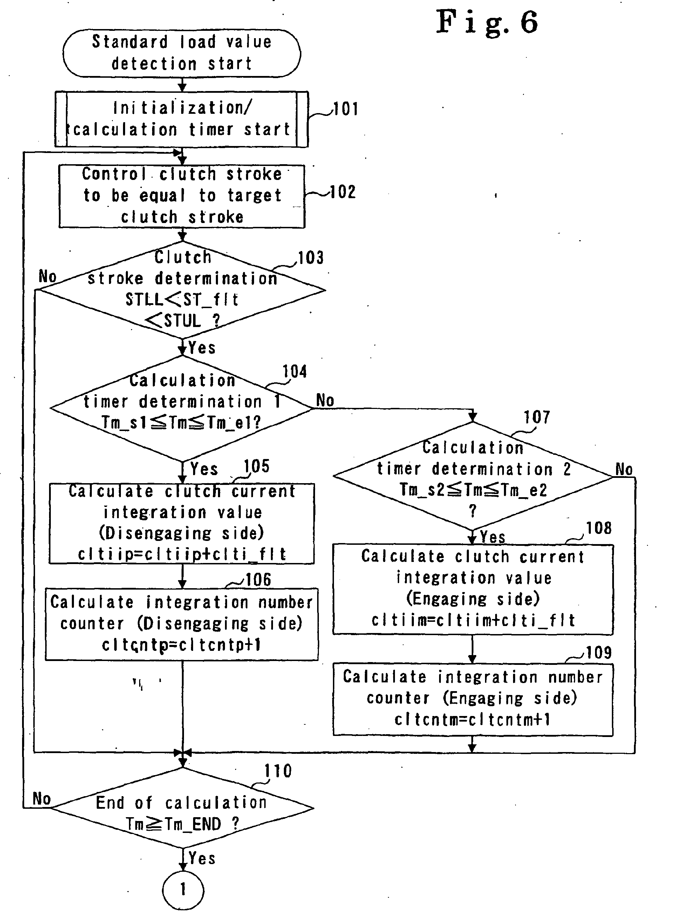

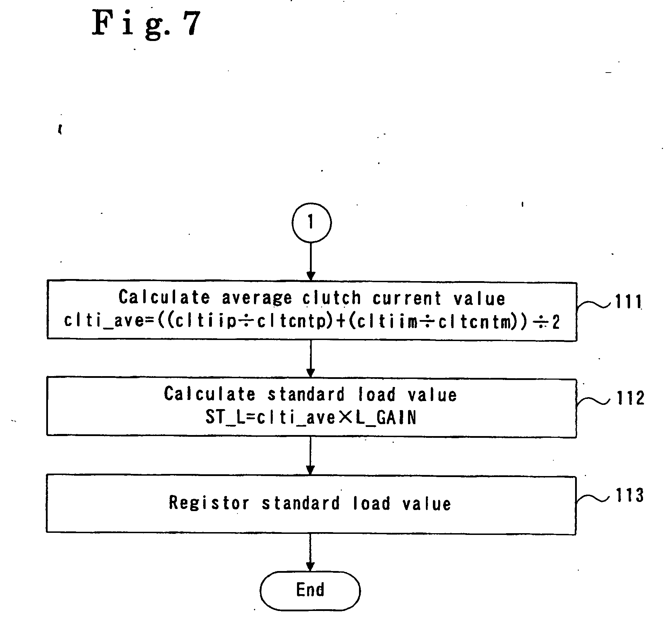

First, Figs. 6 and 7 explain by each flowchart how to detect and register the standard release load value at the plant after the actuator 30 and the like are assembled. The release load value according to the present embodiment is a value required when the pressure plate 24 moves away from or approaches the flywheel 21.

Immediately after the actuator 30 is assembled at the plant, an actual stroke (clutch stroke) of the rod 31 is set so that a small amount of the release load is applied to the pressure plate 24 via the release fork 27 (precisely, contact portion 27a). Thus, in this state, the clutch disc 23 substantially engages with the flywheel 21 to be thereby rotatable with the flywheel 21 as a unit. When the clutch stroke ST is detected by performing a routine of the flowcharts, this first detected clutch stroke ST is set and registered in EEPROM as a full-engaging point, i.e. an original point (0 value). That is, the CPU 41 controls the clutch stroke based on the full-engaging point as the absolute criteria.

First, in the routine for controlling the clutch stroke for detecting the standard release load value, each data is initialized and a calculation timer Tm starts time counting in Step 101. Next, the CPU 41 proceeds to Step 102 in which a clutch stroke (ST) is controlled to a target clutch stroke. Specifically, the CPU 41 compares the clutch stroke ST being detected with the preset target clutch stroke and then outputs the motor indicating current value clti so that the target clutch stroke and the clutch stroke ST are equal to each other.

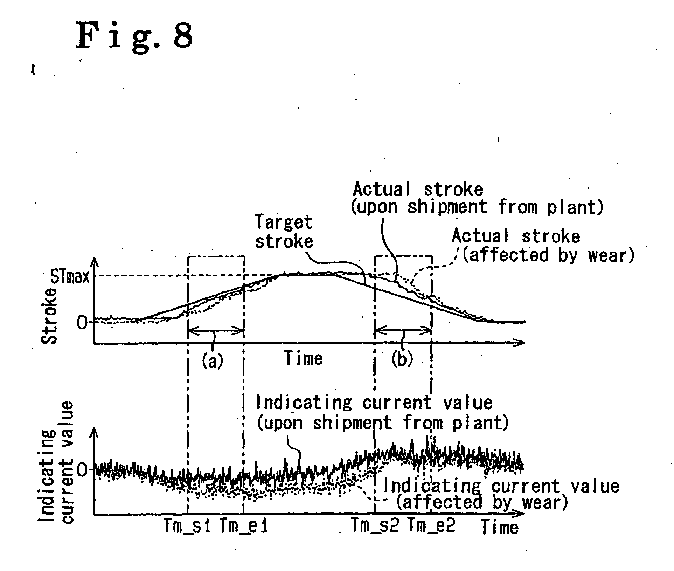

Fig. 8 is a graph showing a relationship among the target clutch stroke, the clutch stroke ST being detected under the clutch stroke control, and the motor indicating current value clti required at this time in connection with the passage of time. In Fig. 8, each data (clutch stroke ST and the motor indicating current value clti) at the time of shipment from the assembly plant and the wear estimation (to be explained later) are shown together only for the purpose of explanation. The target clutch stroke is gradually increased from 0 value (full-engaging point) to a predetermined maximum target clutch stroke STmax in approximate proportion and then gradually decreased to the 0 value again in approximate proportion along with the passage of time. The maximum target clutch stroke STmax is set being positioned adjacent to the full-engaging point and is therefore sufficiently smaller than a clutch stroke required in case that the pressure plate 24 moves fully away from the flywheel 21. That is, the wear of the clutch facings 23a and 23b is estimated at a point at which the clutch stroke is positioned adjacent to the full-engaging point where the release load is most fluctuated. The variation in estimation is therefore minimized and thus the accuracy of the wear estimation is improved. The CPU 41 controls the actual clutch stroke so as to be equal to the target clutch stroke.

The target clutch stroke is gradually increased or decreased in approximate proportion as mentioned above so that a change speed of the clutch stroke (ST), i.e. a rotational speed of the electric motor 32 is controlled to be constant. When the rotational speed of the electric motor 32 is controlled to be constant, a motor load under the electric motor 32 being driven (i.e. the release load) can be easily calculated based on a current value (motor indicating current value clti) at that time.

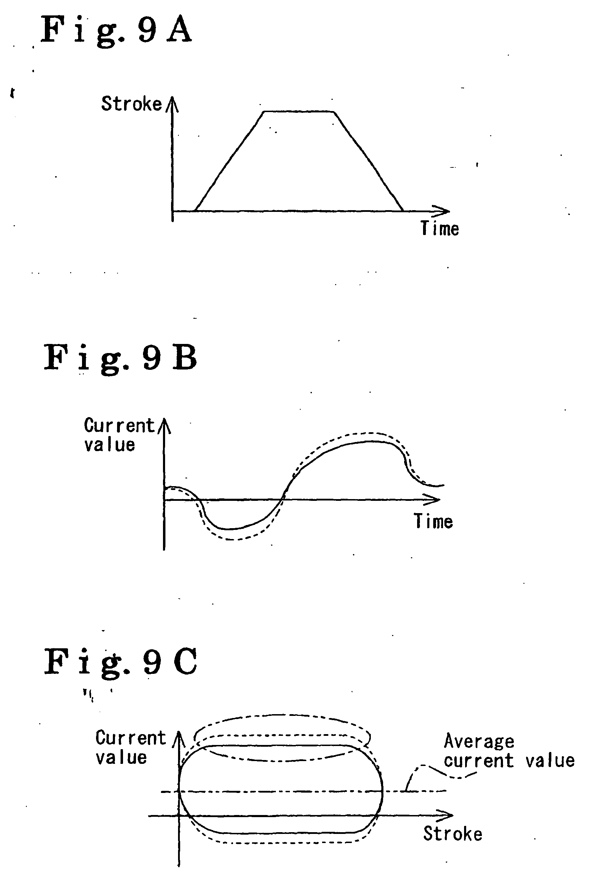

In addition, the target clutch stroke is changed with the gradual increase and decrease as one set so that the electric motor 32 is reciprocatory driven to thereby reciprocate the clutch between the engaging side (where the clutch disc engages with the flywheel) and the disengaging side (where the clutch disc disengages from the flywheel). As shown in Figs. 9A and 9B, the motor load is affected by a hysteresis and thus the error of estimating the motor load (release load) may be caused by the fluctuation of the current value (motor indicating current value) due to the change of the wear and the like if the electric motor 32 is driven only in one direction (outward direction, i.e. disengaging side of the clutch stroke, or inward direction, i.e. engaging side of the clutch stroke). Thus, the target clutch stroke is reciprocated so as to detect each current value in outward direction and inward direction so as to obtain an average value thereof for estimating the motor load (release load) without the effect of the hysteresis. As shown in Fig. 9C, the current value (average current value) is not influenced by the hysteresis even being changed since the average current value is obtained. Thus, the motor load (release load) is estimated without the influence of the hysteresis.

The CPU 41 proceeds to Step 103 where a clutch stroke determination is performed. In Step 3, it is determined whether or not a clutch stroke annealing value ST_flt, which is obtained by applying a filtering operation to the clutch stroke so as to eliminate a sensor noise, is greater than a predetermined lower limit value STLL and also smaller than a predetermined upper limit value STUL. That is, the clutch stroke determination is performed to determine whether or not the clutch stroke (clutch stroke annealing value ST_flt) is positioned within a predetermined region "a" or "b" shown in Fig. 8 when the clutch is reciprocated in response to the target clutch stroke.

When it is determined that the clutch stroke annealing value ST_flt is not within the aforementioned region "a" or "b", the CPU 41 proceeds to Step 110. Whereas, if it is determined that the clutch stroke annealing value St_flt is within the region "a" or "b", the CPU 4 proceeds to Step 104 where a calculation timer determination 1 is performed. Specifically, it is determined whether or not the time counted by the above-mentioned calculation timer Tm is between a predetermined first current monitor start time Tm_s1 and a predetermined first current monitor end time Tm_e1.

The calculation timer determination 1 is performed to determine that the present clutch stroke is in the outward direction (disengaging side) when the clutch stroke annealing value ST_flt is within the region "a" or "b". That is, a time period between the first current monitor start time Tm_s1 and the first current monitor end time Tm_e1 substantially corresponds to that during which the clutch stroke annealing value ST_flt is positioned within the region "a" (outward direction, i.e. disengaging side).

When it is determined that the clutch stroke annealing value ST_flt is within the region "a" in Step 104, the CPU 41 proceeds to Step 105 where a clutch current integration value (disengaging side) is calculated. Specifically, the CPU 41 stores a new clutch current integration value (disengaging side) cltiip obtained by adding a motor indicating current annealing value clti_flt, which is obtained by applying the filtering operation to the motor indicating current value clti, to the present clutch current integration value (disengaging side) cltiip presently stored in the CPU 41.

The CPU 41 proceeds to Step 106 where an integration number counter calculation (disengaging side) is performed. The CPU 41 stores a new integration number counter (disengaging side) cltcntp being incremented by one from the present integration number counter (disengaging side) cltcntp presently stored in the CPU 41. The CPU 41 is then proceeds to Step 110.

When it is determined the clutch stroke annealing value ST_flt is not within the region "a", the CPU 41 proceeds to Step 107 where a calculation timer determination 2 is performed. In Step 107, it is determined whether or not the time counted by the calculation timer Tm is between a predetermined second current monitor start time Tm_s2 and a predetermined second current monitor end time Tm_e2. The calculation timer determination 2 is performed to determine that the present clutch stroke is in the inward direction (engaging side) when the clutch stroke annealing value ST_flt is within the region "a" or "b". That is, a time period between the second current monitor start time Tm_s2 and the second current monitor end time Tm_e2 substantially corresponds to that during which the clutch stroke annealing value ST_flt is positioned within the region "b" (inward direction, i.e. engaging side).

When it is determined that the clutch stroke annealing value ST_flt is within the region "b" in Step 107, the CPU 41 proceeds to Step 108 where a clutch current integration value (engaging side) is calculated. The CPU 41 stores a new clutch current integration value (engaging side) cltiim, which is obtained by adding the motor indicating current annealing value clti_flt to the present clutch current integration value (engaging side) cltiim presently stored in the CPU 4.

The CPU 41 then proceeds to Step 109 where an integration number counter calculation (engaging side) is performed. The CPU 41 stores a new integration number counter (engaging side) cltcntm being incremented by one from the present integration number counter (engaging side) cltcntm presently stored in the CPU 41. The CPU 41 then proceeds to step 110.

When it is determined that the clutch stroke annealing value ST_flt is not within the region "b" in Step 107, the CPU 41 proceeds to Step 110.

In Step 110, the CPU 41 determines end of measuring based on whether or not the time counted by the calculation timer Tm exceeds a predetermined measuring end time Tm_END. The measuring end time Tm_END is set based on a time when the clutch completes reciprocating and corresponds to a time when the measuring is completed in the outward direction (disengaging side) and the inward direction (engaging side).

When it is determined that the measuring is not completed in Step 110, the CPU 41 returns to Step 102 and repeats the same procedure (Step 102 through Step 109). When it is determined that the measuring is completed, the CPU 41 proceeds to Step 111 in Fig. 7.

In Step 111, the CPU 41 calculates an average clutch current value. The CPU 41 calculates the average clutch current value clti_ave by obtaining an average value of the current values on the disengaging side and the engaging side of the clutch stroke. The average current value on the disengaging side is obtained by dividing the clutch current integration value (disengaging side) cltiip by the integration number counter (disengaging side) cltcntp. The average current value on the engaging side is obtained by dividing the clutch current integration value (engaging side) cltiim by the integration number counter (engaging side) cltcntm. The average value of the current values on the engaging side and the engaging side of the clutch stroke is obtained so that the influence caused by the hysteresis of the motor load is absorbed (See Fig. 9C).

The CPU 41 then proceeds to Step 112 where a standard load value ST_L is calculated as a standard release load value. The standard load value ST_L is obtained by multiplying the average clutch current value clti_ave by a predetermined load estimated gain L_GAIN. The load estimated gain L_GAIN is experimentally evaluated based on a relationship between the current value (motor indicating current value) and the release load (motor load). The standard load value ST_L may be an average value obtained by repeating the procedure (Step 101 through Step 112) multiple times (3 times, for example). In this case, the reliability of the standard load value ST_L is improved.

The CPU 41 proceeds to Step 113 where the standard load value ST_L is registered in EEPROM. The CPU 41 finishes the routine for detecting the standard load value.

A method of estimating the wear amount, which is performed when the clutch is used after shipped from the plant, is explained as follows.

In case that the clutch is used after shipped from the plant, the CPU 41 estimates the wear amount of the clutch facings 23a and 23b in view of the temperature thereof. Thus, the calculation of estimating the temperature of the clutch facings 23a and 23b is explained first.

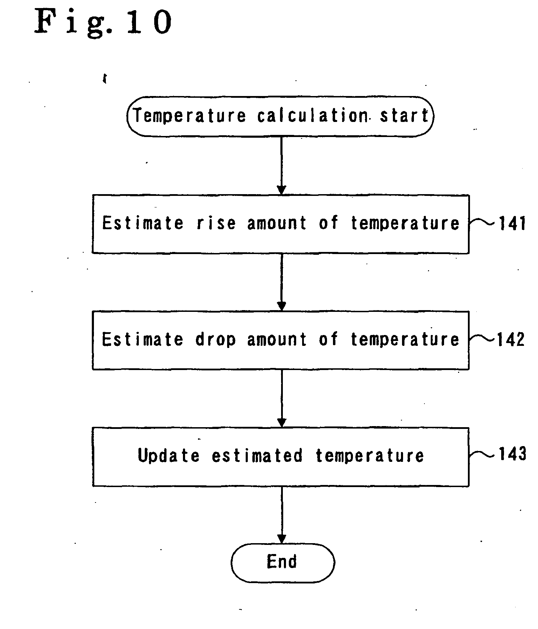

Fig. 10 is a flowchart showing the calculation routine of the temperature estimation of the clutch facings 23a and 23b. The calculation of the estimated temperature of the clutch facings 23a and 23b is performed repeatedly at predetermined intervals by interruption between the engine start and the engine stop.

In the routine of estimating the temperature of the clutch facings 23a and 23b, the CPU 41 estimates a rise amount of a temperature of the clutch 20 (i.e. clutch facings 23a and 23b).

Specifically, the CPU 41 evaluates a relative rotational speed between the engine 10 and the input of the transmission 11 based on a difference between the engine rotational speed and the transmission input shaft rotational speed. Then, the CPU 41 converts a unit of the relative rotational speed such that a relative angular speed between the engine rotational speed and the transmission input shaft rotational speed can be calculated. The CPU 41 then calculates an input energy of the clutch by multiplying the aforementioned relative angular speed by a clutch torque. Next, the CPU 41 calculates the rise amount of the temperature of the clutch 20 per second. That is, the CPU 41 first divides the input energy of the clutch by two, which is then multiplied by a preset rise correction coefficient. The thus-obtained value is divided by a value obtained by multiplying the specific heat by a weight of the clutch cover. Finally, the CPU 41 calculates the rise amount of temperature per calculation cycle of the routine by multiplying the rise amount of the temperature of the clutch 20 per second by the control cycle of this routine.

After the CPU 41 calculates the rise amount of the temperature of the clutch 20, the CPU 41 then estimates a drop amount of the temperature of the clutch 20 (i.e. clutch facings 23a and 23b) in Step 142.

In Step 142, the CPU 41 first calculates a difference between the estimated temperature of the clutch facings 23a and 23b and the engine water temperature. At this time, the estimated temperature of the clutch facings 23a and 23b, having been estimated in the previous routine is used in this calculation. If the previous routine does not exist (for example, at the engine start), the estimated temperature of the clutch facings 23a and 23b upon the engine stop at the previous time is used.

When the difference between the estimated temperature of the clutch facings 23a and 23b and the engine water temperature is obtained, the CPU 41 adds a value, which is obtained by multiplying a predetermined standard heat conductivity by a variable, to the heat conductivity under the natural convection so as to calculate the heat conductivity for calculation used for the calculation performed after this point. The variable used to calculate the heat conductivity for calculation is varied in response to the engine rotational speed or the vehicle speed. That is, the variable shows a cooling effect by a cooling fan operating along with the engine rotational speed and a wind blown into a radiator depending on the vehicle speed.

When the heat conductivity for calculation is obtained, the CPU 41 calculates heat radiation energy by multiplying the difference between the estimated temperature of the clutch facings 23a and 23b and the engine water temperature, the heat conductivity, and a dimension for the heat radiation. Then, the CPU 41 calculates the drop amount of the temperature per second. That is, the CPU 41 divides a value, which is obtained by multiplying the heat radiation energy by a preset drop correction coefficient, by a value estimated by multiplying the specific heat and the weight of the clutch cover. After the CPU 41 calculates the drop amount of the temperature of the clutch 20 per second, the CPU 41 then calculates the drop amount of the temperature per calculation cycle of the routine by multiplying the drop amount of the temperature per second by the control cycle of the routine. The CPU 41 proceeds to Step 143.

In Step 143, the CPU 41 calculates an estimated temperature of the clutch 20 by adding the rise amount of the temperature and the drop amount of the temperature of the clutch facings 23a and 23b to the estimated temperature of the clutch facings 23a and 23b, which is calculated in the previous routine. The CPU 41 rewrites the estimated temperature being stored to this newly estimated temperature of the clutch facings 23a and 23b and finishes the procedure.

The CPU 41 uses the thus-obtained estimated temperature of the clutch facings 23a and 23b when estimating the wear amount of the clutch facings 23a and 23b.

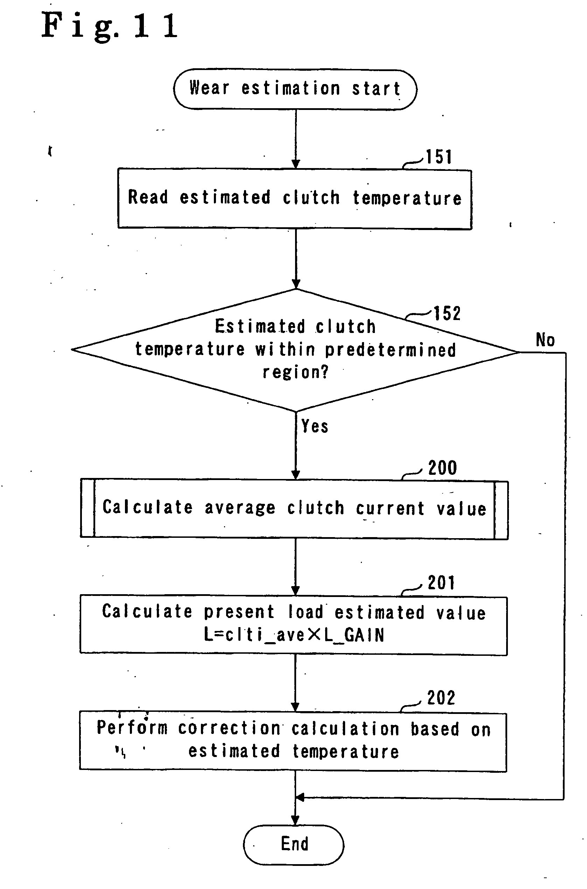

Fig. 11 is a flowchart showing how to estimate the wear amount of the clutch facings 23a and 23b. The routine of the flowchart is performed each time the ignition switch 71 is turned on from off so that the wear estimation is performed without receiving the influence of the vehicle condition (driving condition).

In the estimation of the wear amount, In Step 151, the CPU 41 reads the estimated temperature of the clutch facings 23a and 23b being calculated in the aforementioned routine. The CPU 41 then proceeds to Step 152.

In Step 152, the CPU 41 determines whether or not the estimated temperature is within a predetermined permitted temperature range. According to the present embodiment, the predetermined permitted temperature range is set between T1 and T2.

When the estimated temperature is out of the permitted temperature range, i.e. the estimated temperature is lower than T1 or higher than T2, the CPU 41 finishes the procedure.

Whereas, when the estimated temperature of the clutch facings 23a and 23b is within the permitted temperature range, the CPU 41 proceeds to Step 200.

In Step 200, the CPU 41 calculates an average clutch current. The calculation of the average clutch current at this time is same as that performed upon the shipment from the assembly plant (Step 101 through Step 111) and thus included in the average clutch current calculation in Step 200.

After the CPU 41 calculates the average clutch current clti_ave in Step 200, the CPU 41 proceeds to Step 201. The CPU 41 calculates a present load estimated value L, corresponding to a present release load value, by multiplying the average clutch current clti_ave by the load estimated gain L_GAIN in step 201 and proceeds to Step 202.

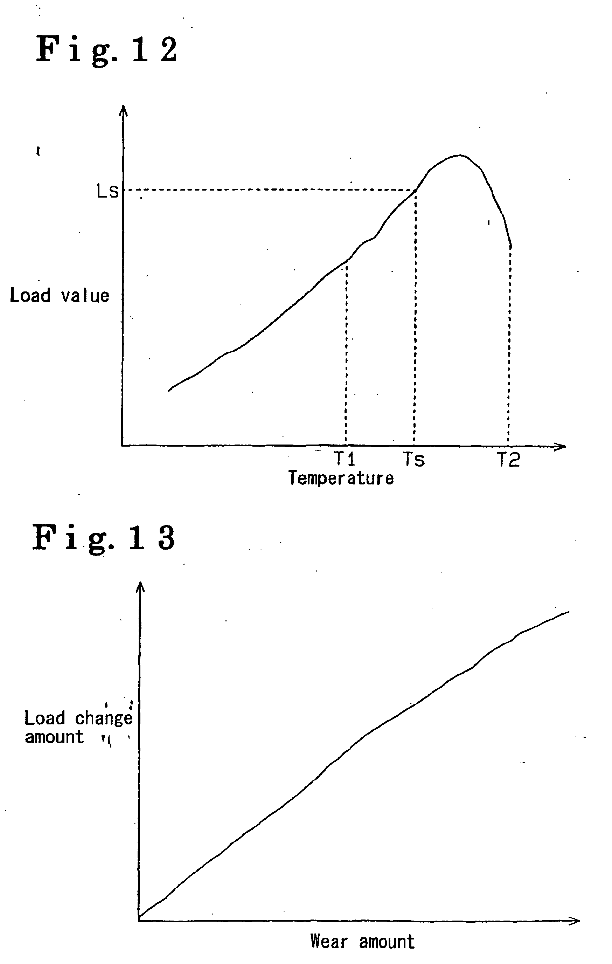

In Step 202, the CPU 41 performs a correction calculation for the present load estimated value L based on the estimated temperature of the clutch facings 23a and 23b. Fig. 12 is a graph showing a change amount of the load in connection with the temperature change of the clutch facings 23a and 23b. A temperature correction coefficient is set based on an estimated load value Ls corresponding to a predetermined standard temperature Ts so that any corresponding estimated load values to the temperature within the range from T1 to T2 are constant.

Accordingly, a variation of the load amount due to the temperature change of the clutch facings 23a and 23b is cancelled by multiplying the temperature correction coefficient by the present load estimated value L. Specifically, when the temperature of the clutch facings 23a and 23b is within the range from T1 to T2, the load change due to the temperature change of the clutch facings 23a and 23b is gradually increased along with the rise of the temperature, and then decreased. Thus, the temperature correction coefficient is set to be gradually decreased along with the rise of the temperature and then increased.

The CPU 41 rewrites the present load estimated value L being stored to the new present load estimated value L by multiplying the present load estimated value L being stored by the thus-obtained temperature correction coefficient and then finishes the procedure of the routine.

The CPU 41 calculates a load change amount ΔL by subtracting the aforementioned standard load value ST_L from the thus-obtained present load estimated value L, thereby estimating the wear amount of the clutch facings 23a and 23b.

Fig. 13 is a graph showing a change amount of the load along with the wear amount change of the clutch facings 23a and 23b. As is seen from the graph, the more the wear amount is increased, the more the load change (ΔL) is increased.

An adjustment operation according to the present embodiment is explained as follows. The adjustment operation is performed under a condition that various execution conditions are satisfied. The execution conditions include, for example, the disengagement of the friction clutch 20. This is because the adjustment operation cannot be performed if the frictional clutch 20 is in the engaged state.

In addition, the execution conditions include the engine speed NE within a range between a predetermined lower limit value and a predetermined upper limit value. This is because the adjustment operation, which causes the frictional clutch 20 to be in the disengaging state, is not desirable to be performed at a so-called "gear parking" at which a predetermined transmission gear is engaged under the vehicle in parked state with the engine 10 stopped. Further, The adjustment operation should be performed with the engine 10 less vibrated and the frictional clutch 20 not resonated for preventing the wrong adjustment.

Furthermore, the execution conditions include 0 value of the vehicle speed for preventing the wrong adjustment due to the vibration caused by the vehicle driving. When the CPU 41 satisfies the abovementioned execution conditions, the actuator 30 performs the adjustment operation by driving the actuator 30. Precisely, the CPU 41 controls the clutch stroke ST equal to the target clutch stroke, which is set in response to a required amount of the adjustment operation. An operation at this time is explained referring to Fig. 4.

Immediately after the adjustment operation starts, the frictional clutch 20 becomes disengaged state and thus the clutch stroke ST is controlled to a value ST0. As shown in Fig. 4A, the predetermined distance Y is maintained between the contact portion 24b of the pressure plate 24 and the pressure plate stopper portion 22d of the clutch cover 22 at this time.

When the clutch stroke ST is further increased in the disengaging side due to the driving of the actuator 30, the posture of the diaphragm spring 25 is changed from a state shown in Fig. 4A to that shown in Fig. 4B.
Specifically, the diaphragm spring 25 receives a force directed to the flywheel 21 at the force applied portion 26a and thus swings with respect to the support members 25b and 25c. The contact portion 24b of the pressure plate 24 and the pressure plate stopper portion 22d of the clutch cover 22 become in contact with each other accordingly.

When the clutch stroke ST is still further increased to the target clutch stroke, the posture of the diaphragm spring 25 is further changed from a state shown in Fig. 4B to that shown in Fig. 4C. At this time, the contact portion 24b of the pressure plate 24 is in contact with the pressure plate stopper portion 22d of the clutch cover 22, thereby restricting the pressure plate 24 to move any further. As a result, a clearance X is obtained between the outer circumferential edge portion of the diaphragm spring 25 and the taper portion 24d of the pressure plate 24. Then, as shown in Fig. 5, the adjust wedge member 29 is rotated by a biasing force of the coil spring CS. The taper portion 29a of the adjust wedge member 29 and the taper portion 24d of the pressure plate 24 are in contact with each other at vertically higher portions thereof in Fig. 5 whereby the flat portion of the adjust wedge member 29 facing the diaphragm spring 25 follows the movement of the outer circumferential edge portion of the diaphragm spring 25. At this time, the adjustment operation is completed.

As mentioned above, a distance between the diaphragm spring 25 and the pressure plate 24 becomes larger with the clearance X, which is a required amount for the adjustment operation. The diaphragm spring 25 can return to an initial position (i.e. position where the diaphragm spring 25 is set upon shipment from the assembly plant and no wear exists) and thus the load change under the clutch operation can be decreased.

According to the present embodiment mentioned above, the present load estimated value L is corrected based on the estimated temperature of the clutch facings 23a and 23b. Thus, the present load estimated value L can be corrected in connection with the temperature change of the clutch facings 23a and 23b, thereby accurately estimating the wear of the clutch facings 23a and 23b.

According to the present embodiment mentioned above, the wear amount is not estimated when the temperature of the clutch facings 23a and 23b is out of the predetermined range. Thus, the correction by the temperature of the clutch facings 23a and 23b can be performed only within the range with a high reliability of the estimation, thereby improving the estimation accuracy of the wear amount of the clutch facings 23a and 23b.

According to the present embodiment mentioned above, the CPU 41 always calculates the input energy and the heat radiation energy of the clutch by interruption at regular intervals when the engine is operated. Thus, the temperature value of the clutch facings 23a and 23b is always updated, thereby accurately estimating the wear of the clutch facings 23a and 23b.

The present embodiment of the invention is not limited to the above and can be changed as follows. In the adjustment operation, the clearance X is provided between the outer circumferential edge portion of the diaphragm spring 25 and the taper portion 24d of the pressure plate 24. Then the adjust wedge member 29 rotates by the biasing force of the coil spring CS. The taper portion 29a of the adjust wedge member 29 and the taper portion 24d of the pressure plate 24 become in contact with each other at vertically higher portions thereof in Fig. 5 for compensating the wear of the clutch facings 23a and 23b. Instead, the rotation of the adjust wedge member 29 for the wear compensation can be conducted by an intermittent rotation mechanism in which the rotation of the adjust wedge member 29 is permitted per a predetermined rotation angle. In this case, the taper portion 29a of the adjust wedge member 29 and the taper portion 24d of the pressure plate 24 are in contact with each other intermittently at vertically higher contacting portions thereof in Fig. 5 in case of compensating the wear. Thus, the wrong adjustment or repeating of fine adjustment can be prevented.

According to the present embodiment, the temperature of the clutch facings 23a and 23b is evaluated by calculating the rise amount of the temperature and the drop amount of the temperature per calculation cycle of the routine as shown in Steps 141 through 143, which is used for renewing the present temperature of the clutch facings 23a and 23b. In this case, however, the CPU 41 is only required to recognize the temperature of the clutch facings 23a and 23b. Therefore, the temperature of the clutch facings 23a and 23b can be detected by a temperature sensor.

According to the present embodiment, the correction calculation based on the estimated temperature of the clutch facings 23a and 23b is performed when the wear amount of the clutch facings 23a and 23b is estimated so as not to wrongly recognize the estimated wear amount from the temperature change of the clutch facings 23a and 23b. In this case, however, it is only required not to wrongly detect the wear amount of the clutch facings 23a and 23b depending on the temperature of the clutch facings 23a and 23b when the wear amount is estimated. Thus, the wear amount of the clutch facings 23a and 23b may be estimated only under a condition that the temperature of the clutch facings 23a and 23b are substantially constant.

The condition under which the temperature of the clutch facings 23a and 23b is constant is that when a sufficient time is elapsed after the engine stop and thus the temperature of the clutch facings 23a and 23b is substantially equal to an ambient temperature.

Thus, the wear amount of the clutch facings 23a and 23b may be estimated when a predetermined time is elapsed by measuring an elapsed time from the engine stop.

In addition, a large temperature difference exists between the water temperature and an intake temperature of the engine under the engine rotation. Thus, when the water temperature and the intake temperature of the engine become substantially equal to each other, it is considered that the sufficient time is elapsed from the engine stop and also the water temperature and the intake temperatures of the engine are regarded substantially equal to the ambient temperature. Therefore, the wear amount of the clutch facings 23a and 23b may be estimated when a difference between the water temperature and the intake temperature is small, which is calculated by CPU 41.

## Claims

1. A clutch control device including a frictional clutch (20) having a flywheel (21) unitarily rotable with an output shaft (10a) of a drive unit (10), a clutch disc (23) facing to the flywheel, an actuator (30) for generating a load for controlling an engaging relationship between the clutch disc and the flywheel, an estimating means for estimating a wear amount of a clutch facing (23a, 23b) provided at the clutch disc and a correcting means for correcting the wear amount of the clutch facing,
**characterized in that**
a detecting means is provided for detecting a temperature of the clutch facing,
the estimating means estimates the wear amount of the clutch facing based on a change of the load of the actuator, while the actuator engages and disengages the friction clutch; and
the correcting means corrects the wear amount of the clutch facing based on the temperature of the clutch facing.

2. A clutch control device according to claim 1, wherein the estimating means estimates the wear amount of the clutch disc based on an average load for engaging and an average load for disengaging the clutch disc and the flywheel.

3. A clutch control device according to claim 2, wherein the wear amount of the clutch facing is not estimated when the temperature of the clutch facing is out of a predetermined range.

4. A clutch control device according to claim 3, wherein the estimating means estimates the wear amount of the clutch facing when a water temperature and an intake temperature of the drive unit are substantially equal to each other.

5. A clutch control device according to claim 4, wherein the average load for engaging and the average load for disengaging the clutch disc and the flywheel is calculated by multiplying an average clutch current value by a load estimated gain.

6. A clutch control device according to claim 5, wherein the correction means corrects the wear amount of the clutch facing by a temperature correction coefficient being set so that a variation of the load amount of the clutch facing due to a temperature change of the clutch facing is cancelled by multiplying the temperature correction coefficient by the present load estimated value.

## Patentansprüche

1. Kupplungssteuervorrichtung mit einer Reibungskupplung (20) mit einem sich zusammen mit einer Ausgangswelle (10a) einer Antriebseinheit drehenden Schwungrad (21), einer dem Schwungrad zugewandten Kupplungsscheibe (23), einem Stellglied (30) zur Erzeugung einer Last zur Steuerung einer Eingriffsbeziehung zwischen der Kupplungsscheibe und dem Schwungrad, eine Schätzeinrichtung zum Schätzen eines Verschleißbetrages einer an der Kupplungsscheibe vorgesehenen Kupplungsfläche (23a, 23b) und eine Korrektureinrichtung zur Berichtigung des Verschleißbetrages der Kupplungsfläche,
**dadurch gekennzeichnet dass**
eine Erfassungseinrichtung zur Erfassung einer Temperatur der Kupplungsfläche vorgesehen ist,
dass die Schätzeinrichtung den Verschleißbetrag der Kupplungsfläche auf der Grundlage einer Laständerung des Stellgliedes schätzt, während das Stellglied die Reibungskupplung in Eingriff bringt oder sie freigibt, und
dass die Korrektureinrichtung den Verschleißbetrag der Kupplungsfläche auf der Grundlage der Temperatur der Kupplungsfläche berichtigt.

2. Kupplungssteuervorrichtung nach Anspruch 1, wobei die Schätzeinrichtung den Verschleißbetrag der Kupplungsfläche auf der Grundlage einer mittleren Last zum Eingriff der Kupplungsscheibe mit und einer mittleren Last zum Freigeben der Kupplungsscheibe von dem Schwungrad schätzt.

3. Kupplungssteuervorrichtung nach Anspruch 2, wobei der Verschleißbetrag der Kupplungsscheibe nicht geschätzt wird, wenn die Temperatur der Kupplungsfläche außerhalb eines bestimmten Bereichs liegt.

4. Kupplungssteuervorrichtung nach Anspruch 3, wobei die Schätzeinrichtung den Verschleißbetrag der Kupplungsscheibe schätzt, wenn eine Wassertemperatur und eine Ansaugtemperatur der Antriebseinheit im Wesentlichen einander gleich sind.

5. Kupplungssteuervorrichtung nach Anspruch 4, wobei die mittlere Last zum Eingriff der Kupplungsscheibe mit und die mittlere Last zum Freigeben der Kupplungsscheibe von dem Schwungrad durch Multiplikation eines mittleren Kupplungsstromwerts mit einem geschätzten Lastwert berechnet wird.

6. Kupplungssteuervorrichtung nach Anspruch 5, wobei die Korrektureinrichtung den Verschleißbetrag der Kupplungsfläche durch einen Temperaturkorrekturkoeffizienten berichtigt, der so eingestellt ist, dass eine Änderung des Lastbetrages der Kupplungsfläche infolge einer Temperaturänderung der Kupplungsfläche durch Multiplizieren des Temperaturkorrekturkoeffizienten mit dem gegenwärtig geschätzten Lastwert aufgehoben wird.

## Revendications

1. Dispositif de commande d'embrayage comprenant un embrayage (20) à friction ayant un volant (21) pouvant tourner de manière solidaire d'un arbre (10a) de sortie d'une unité (10) d'entraînement, un disque (23) d'embrayage orienté vers le volant, un actionneur (30) pour engendrer une charge pour commander une relation d'accouplement entre le disque d'embrayage et le volant, un moyen d'estimation destiné à estimer une grandeur d'usure d'une garniture (23a, 23b) d'embrayage, prévue au niveau du disque d'embrayage et un moyen de correction destiné à corriger la grandeur d'usure de la garniture d'embrayage, **caractérisé en ce que** :
un moyen de détection est prévu pour détecter une température de la garniture d'embrayage ;
le moyen d'estimation estime la grandeur d'usure de la garniture d'embrayage, sur la base d'une variation de la charge de l'actionneur, tandis que l'actionneur accouple et désaccouple l'embrayage à friction ; et
le moyen de correction corrige la grandeur d'usure de la garniture d'embrayage, sur la base de la température de la garniture d'embrayage.

2. Dispositif de commande d'embrayage selon la revendication 1, dans lequel le moyen d'estimation estime la grandeur d'usure du disque d'embrayage, sur la base d'une charge moyenne pour accoupler et d'une charge moyenne pour désaccoupler le disque d'embrayage et le volant.

3. Dispositif de commande d'embrayage selon la revendication 2, dans lequel la grandeur d'usure de la garniture d'embrayage n'est pas estimée lorsque la température de la garniture d'embrayage est en dehors d'une plage prédéterminée.

4. Dispositif de commande d'embrayage selon la revendication 3, dans lequel le moyen d'estimation estime la grandeur d'usure de la garniture d'embrayage, lorsqu'une température d'eau et une température d'admission de l'unité d'entraînement sont sensiblement égales l'une à l'autre.

5. Dispositif de commande d'embrayage selon la revendication 4, dans lequel on calcule la charge moyenne pour accoupler et la charge moyenne pour désaccoupler le disque d'embrayage et le volant, en multipliant une valeur moyenne de courant d'embrayage par un gain estimé de charge.

6. Dispositif de commande d'embrayage selon la revendication 5, dans lequel le moyen de correction corrige la grandeur d'usure de la garniture d'embrayage avec un coefficient de correction de température étant défini de sorte que l'on annule une variation de la grandeur de charge de la garniture d'embrayage, due à une variation de température de la garniture d'embrayage, en multipliant le coefficient de correction de température par la valeur estimée de charge actuelle.
